# EUROPÄISCHE PATENTANMELDUNG

(11) **EP 2 738 915 A2**
(43) Veröffentlichungstag der Anmeldung: **04.06.2014**
(21) Anmeldenummer: 13195074.3
(22) Anmeldetag: 29.11.2013
(51) Int. Cl.: H02K 3/24

(54) **Kühlung für einen Wickelkopfraum**

(30) Priorität: 30.11.2012 AT 12632012
(71) Anmelder: Heiden, Bernhard, 8160 Weiz (AT)
(72) Erfinder: Heiden, Bernard DI Dr., 8160 Weiz (AT); Tonino-Heiden, Bianca, 8160 Weiz (AT); Heiden, Benedikt, 8160 Weiz (AT)
(74) Vertreter: Patentanwälte Barger, Piso & Partner

(57) **Zusammenfassung**

Die Erfindung betrifft eine Kühlung für einen Wickelkopfraum.

Um diese zu verbessern ist vorgesehen, dass das im Wickelkopf enthaltene Fluid an der Innenseite (10) der Wassermantelkühlung (4) mit erhöhter Geschwindigkeit geführt wird.

Dies kann insbesondere dadurch erreicht werden, dass das Fluid durch einen auf der Welle (12) aufsitzenden Radiallüfter (11) beschleunigt wird und in einer Vorrichtung (17), die eine gebogene Kurve, beispielsweise einen Viertelkreis, ausbildet, an die Innenseite (10) gelenkt wird.

## Beschreibung

Die Erfindung betrifft die Kühlung eines Wickelkopfraums entsprechend dem Oberbegriff des Anspruches 1.

Die elektrischen Motoren bzw. Generatoren bestehen üblicherweise aus Rotor- und Stator-Blechpaketen. Darin wird elektrische Energie umgewandelt. Bei den Motoren wird Strom in mechanische Bewegungsenergie umgewandelt, bei den Generatoren ist es genau umgekehrt, es wird Bewegungsenergie in elektrische Energie umgewandelt. Das Prinzip gilt für beide Anwendungen, im folgenden GM (Generator/Motor) genannt.

Bei einem GM üblicher Bauart mit Wassermantelkühlung wird innerhalb des GM Wärme erzeugt, bzw. wird ein Teil der elektrischen Energie bzw. der Bewegungsenergie in Verlustenergie umgewandelt, die abgeführt werden muss, um die Temperaturklassen, bzw. die erlaubten Grenztemperaturen der Wicklungsisolation einzuhalten.

Dabei werden bei üblichen Industrieausführungen bei einer Wassermantelkühlung je nach Kühlungstypus ca. 10% der Wärme über den Wassermantelteil abgeführt, der den Wickelkopfraum umschließt. Der Wickelkopfraum wird durch den K-Ring (Kurzschlussring des Rotors) bzw. durch die Geometrie desselbigen belüftet. Diese Geometrie besteht aus Rechteckprofilen, die x-fach am Umfang rotiert sind mit Fluidzwischenräumen dazwischen, ähnlich einem "geraden", aus nicht gekrümmten Schaufeln bestehenden, Lüfter. Selbst wenn dadurch eine Belüftung stattfindet, hat der Ort, an dem diese stattfindet keine entscheidende Rolle.

Es ist die Seite interessant, an der die Wärme auf der anderen Seite abgeführt wird. Dies kann auch beispielsweise mittels Kühlrippen stattfinden (rippengekühlter Motor), was alles Stand der Technik ist.

Die technische Aufgabe der Erfindung ist es, den Wickelkopfraum besser als es aus dem Stand der Technik bekannt ist, kühlen zu können und damit die mögliche Leistungsdichte und/oder die Wärmeabfuhr eines Generators oder Motors zu verbessern.

Dies geschieht auf der Basis, wonach die Strömungsgeschwindigkeit in einem direkten positiven Zusammenhang mit dem Wärmeübergang steht, und diese Funktion eine Potentialfunktion ist gemäß der Reynoldschen Analogie, die bereits den Potenzzusammenhang zwischen Wärmebertragung und Strömung postuliert. Das heißt, mit anderen Worten, dass ein stetig steigender Funktionszusammenhang von Wärmeübergangskoeffizient und Strömungsgeschwindigkeit besteht. Das Entscheidende ist dabei die Strömungsgeschwindigkeit an der Oberfläche auf der Innenseite des Wassermantels oder der Wärmeübergangsfläche die jeweils betrachtet wird.

Das Wesentliche an der Erfindung, durch das sie sich von den bisherigen Ausführungen unterscheidet, ist, dass gezielt an der Wassermantelinnenseite, bzw. der Innenseite der auf der anderen Seite zu kühlenden Fläche, im Wickelkopfraum (im Gegensatz zum blechteilseitigen Raum), eine möglichst hohe Geschwindigkeit des dort befindlichen Fluids erzielt wird, sodass der Wärmeübergang hier maximiert wird. Je nach den erreichten Geschwindigkeiten kann damit die Kühlung wesentlich erhöht werden, sodass sich das Gleichgewicht (eigentlich der "Schwerpunkt") des Wärmestromes, in axialer Richtung gesehen, von der Blechmantelseite zum wickelkopfraumseitigen Bereich hin verschiebt.

Die Erfindung wird im Folgenden anhand der Zeichnung näher erläutert: Dabei zeigt bzw. zeigen
die Fig. 1, rein schematisch, die allgemeine geometrische Situation entsprechend dem Stand der Technik,
die Fig. 2, ebenso schematisch, die erfindungsgemäß erreichbare Situation,
die Fig. 3 eine erste Ausführungsform der Erfindung,
die Fig. 4 eine zweite Ausführungsform der Erfindung,
die Fig. 5, 5a, 5b und 5c eine dritte Ausführungsform der Erfindung, und
die Fig. 6 eine Ausgestaltung.

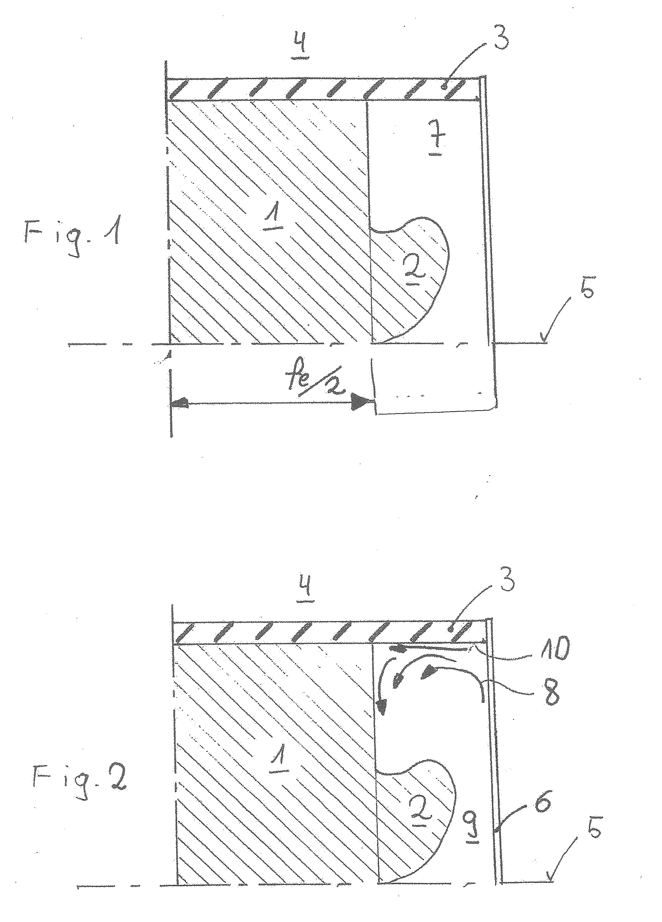

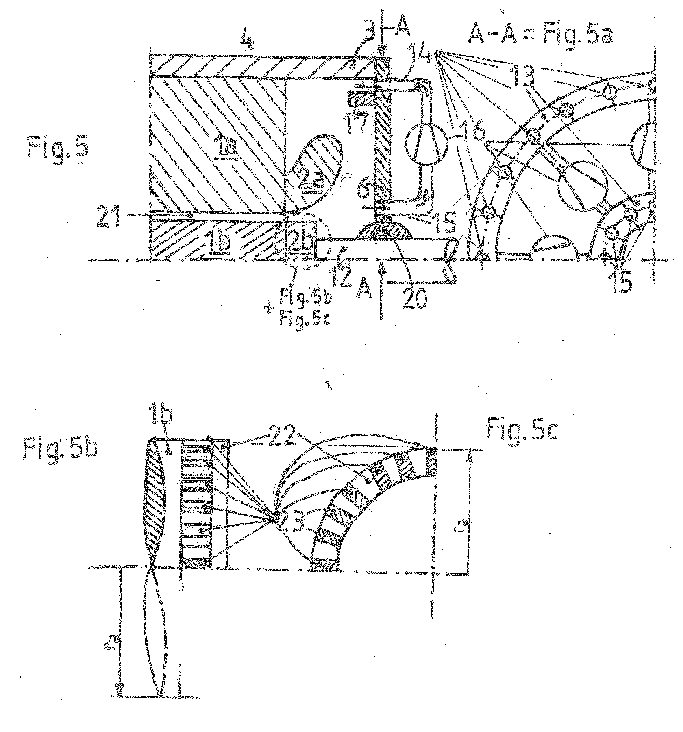

In den Figuren, insbesondere der Fig. 1, ist ein Rotor 1 (der Stator ist hier einfach mit enthalten, da der Spalt dazwischen minimal ist, eine genauere Darstellung liefert Fig. 5) mit einem Wickelkopf 2 im Inneren eines stationären Gehäuses 3, das als Mantel für eine Wassermantelkühlung 4 dient, dargestellt. Im Betrieb entsteht die Wärme zum überwiegenden Teil im schraffierten Bereich "1". Normal zur Drehachse 5 verlaufend befindet sich eine stationäre Stirnwand 6, wodurch ein Wickelkopfraum 7 definiert ist, aus dem die Wärme erfindungsgemäß vermehrt abzuführen ist, da im direkten Kontaktbereich zwischen Rotor 1 und Gehäuse 3 zum Wassermantel 4 keine Verbesserung der Wärmeabfuhr möglich ist..

Wie die Fig. 2 zeigt, ist im Wickelkopfraum 7, um den Wärmeübergang an der Wassermantelaußenseite, entsprechend der Kühlflächeninnenseite 10, zu erhöhen, ein Fluidstrom (Pfeile 8), der zuvor durch eine "Düse" 9 geführt wird, die eine "konusartige" Verjüngung darstellt, geführt. Dabei ist der Konus nicht notwendigerweise gerade, sondern in irgendeiner Form gebogen derart, dass eine Verjüngung in Richtung zum Austritt des Fluids hin erfolgt. Diese Strömungsverjüngung führt zu einer beschleunigten Strömung, wobei wesentlich ist, dass der Oberteil gerade ist, in der dargestellten Projektion, zylindrisch in Bezug auf die Rotation um die Achse 5. Die Strömung "schießt" so über die Wassermantelaußenseite / Kühlflächeninnenseite 10.

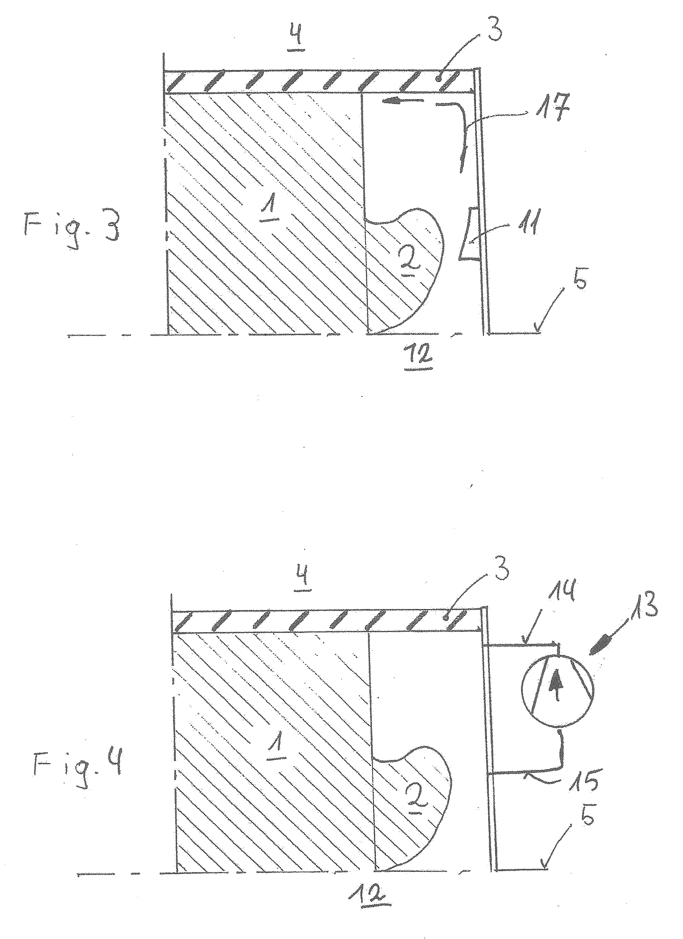

Um diese Strömung zu erreichen, müssen eine Zufuhr und eine Abfuhr der Strömung in den Wickelkopfraum erfolgen. Dabei erfolgt in der in Fig. 3 dargestellten ersten Variante die Zufuhr von einem Radiallüfter 11, der auf die Welle 12 aufgesetzt ist. Dies erfolgt so, dass, wie in der Zeichnung, der außenseitige Raum, Deckel, Abschlussfläche angegrenzt wird. Entweder geschieht dies, indem dort keine Deckscheibe des Lüfters ist oder eine sehr eng an die Außenseite angrenzende Deckscheibe ausgeführt wird. Die Zufuhr erfolgt dabei auf der wellenseitig zugewandten Seite des Lüfters, sodass der Strömungskreis geschlossen ist, in einer ansonsten geschlossenen Maschine,

Die in Fig. 4 dargestellte zweite Variante bedeutet, dass mittels einer außenseitigen Verdichtung des Fluids ein Druckgradient derart aufgebaut wird, dass eine Strömung mit einer Hochgeschwindigkeitskomponente an der Außenseite des Wassermantels / der Innenseite der Kühlfläche erfolgt, wie oben beschrieben.

Eine Möglichkeit dies zu erreichen ist, einen Torus 13 der innen hohl ist (Hohltorus) mit am Umfang (gleichmäßig) verteilten Rohrabstechern 14, 15 in Achsrichtung auszuführen, die eine Fluid Zu/-Abfuhr vom Innen in den Außenraum des GM ermöglichen. Dabei ist das Besondere an Variante, dass, wie in Fig. 5 abgebildet, die Abfuhr vom Inneren durch Rohrabstecher 15 relativ nahe an der Welle 12 erfolgt und direkt in den konusartigen Stromrichterraum 16 eingeführt wird. Wichtig ist auch, dass dieser "dicht" ist, sodass keine unmittelbare "hydraulische Kurzschlussströmung" -bzw. Rückströmung erfolgen kann, was durch diese Konstruktion weitgehend gewährleistet sein sollte. Die Rückströmung erfolgt auch über und durch die Wickelköpfe, wobei durch die stark konvektive Gesamtströmung auch ein besserer Wärmeübergang an den Wickelköpfen erfolgt. In Fig. 5 ist nicht nur ein Lager 20 für die Welle 12 angedeutet, sondern auch die Trennung von Statorblechpaket 1a und Rotorblechpaket 1b eingezeichnet, die sich mit Statorwickelkopf 2a und Rotorwickelkopf 2b fortsetzt, die Ausbildung ist in Fig. 5b und Fig. 5c näher dargestellt.

Ein K-Ring ist mit 22 angedeutet, er kann aus Kupfer oder Aluminium bestehen, Kühlrippen auf der freien (in der Zeichnung rechten) Seite sind möglich. Der Spalt 21 zwischen Stator und Rotor ist geometrisch so klein gegenüber den anderen Fluidkanälen, dass er in den anderen Figuren nicht dargestellt ist. Mit 23 sind Stäbe bzw. die Wicklung zwischen Rotorwickelkopf bzw. K-Ring 22 und Rotorblechpaket 1b.

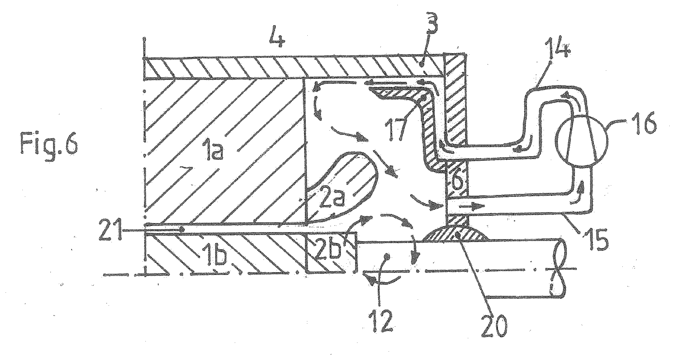

Die in Fig. 6 dargestellte Ausführungsform ist der Variante der Fig. 5 insofern ähnlich, als die Strömung ebenfalls außerhalb des Kopfraumes beschleunigt wird (Verdichtung), angedeutet durch das Verdichtungssymbol 16. Der Unterschied liegt insbesondere darin, dass der Strömungseinlass 14' im Abstand von der Außenseite 10 (Fig. 2) erfolgt und eine Strömungsbiegung bis etwa normal zur Richtung der Drehachse erfolgt. Es ist eine "konusartige" Verjüngung durch eine gebogene Leitvorrichtung 17 vorgesehen und eine ausreichende Länge des Einlaufes, um eine passende Rückströmung zum Eintritt und eine Strömungsvergleichmäßigung zu erreichen.

Zu der Verbindung zwischen den beiden Hohltori betreffend die zweite Variante und die dritte Variante oder einer Kombinationen derselben, ist anzuführen, dass es hier zwei Varianten gibt. Entweder eine Verbindung mit einem Kompressor/Verdichter/Pumpewobei physikalisch eine Verdichtung des Fluids erfolgt, sodass ein Druckgradient gegeben ist (dp/dx) (Differentielle Druckänderung geteilt durch differentielle Ortsänderung), oder aber mit n, sodass sich eine Art sternförmiges Muster ergibt, wie es in Fig.5c mit mehreren Verdichtern 16 dargestellt ist.

Durch diese erfindungsgemäßen Maßnahmen wird nicht nur der Wärmeübergang insgesamt deutlich erhöht, sondern es wird auch der Schwerpunkt des radialen Wärmeüberganges in axialer Richtung zum Wickelkopfraum 7 hin verschoben, wodurch die thermische Belastung geringer wird.

Beliebige Kombinationen zwischen den Varianten sind auch denkbar, bzw. machbar, insbesondere soll die erste Variante und die zweite Variante, genannt: "Variante 12"; insbesondere soll die erste Variante und die dritte Variante, genannt: "Variante 13"; insbesondere soll die erste und die zweite und die dritte Variante, genannt: "Variante 123", insbesondere soll die zweite Variante und die dritte Variante, genannt: "Variante 23", erwähnt werden.

Zusammenfassend kann somit festgehalten werden:
Ein elektrischer Generator/Motor (GM) wird mittels Wassermantel oder Kühlrippen oder eines anderen Kühlsystems von außen gekühlt. Dabei ist üblicherweise innerhalb des Wassermantels das Blechpaket des Stators mit einer Eisenlänge fe (fe*1/2 ist schraffiert in Fig. 1 dargestellt). Die Gehäuselänge, damit die Länge der Kühlfläche ist länger als fe und überragt links und rechts zu ungefähr gleichen Teilen das Blechpaket. In diesem Fluidraum, genannt Wickelkopfraum, befinden sich die "Wickelköpfe" 2 des GM. Am Ende befindet sich ein Abschluss in Form einer zylindrischen Scheibe 6, Deckels, oder so gestalteten Abschlussteils, dass der GM zur Umgebung hin geschlossen ist, damit der Motor nach außen hin vor der Umgebung geschützt ist und umgekehrt.

Um die Kühlung insbesondere in einem solcherart wassermantelgekühlten elektrischen GM zu verbessern ist erfindungsgemäß vorgesehen, die Strömung im Wickelkopfraum zu beschleunigen und zwar genau bzw. besonders an der Zylinderinnenseite.

Dazu wird die Strömung an genau diesem Ort beschleunigt. Dies kann einerseits dadurch erfolgen, dass ein einem Zylinder, bzw. konusartigen Einlass, mit geradem oder gebogenem Einlass von der in die Tafelebene projizierten Blickwinkel aus Luft von außen eingeblasen wird, mit Hilfe eines "Druckgradienten" zugeführt wird.

Nach einer ersten Variante, dargestellt in Fig. 3, erfolgt die Zufuhr der Strömung mittels eingebauten Radiallüfters. Es erfolgt dann die Umlenkung und weitere Verdichtung in dem "konusartigen" Gebilde.

Nach einer Variante, dargestellt in Fig. 4, erfolgt die Zufuhr von außen an einem Zylinderförmigen Ring, und wird dann an der Innenseite des konusartigen Gebildes zugeführt. Dabei wird anstelle des Radiallüfters die "erzwungene" Strömung an annähernd derselben Stelle zugeführt, wo in der ersten Variante der Austritt des Radiallüfters liegt (Hohlzylinder Ein-/Austrittsfläche).

Nach einer anderen Variante, dargestellt in Fig. 5, erfolgt die Zufuhr von außen in einen Art Zylinder bzw. "konusartig" gebogenen, bzw. verjüngten Raum nahe der gekühlten Hohlzylinderinnenfläche. Die Verjüngung dient vor allem der Beschleunigung und Vergleichmäßigung der eintretenden Strömung und muss demzufolge geführt werden. Materialien sind Metall, Eisen, oder Kunststoff. Im Unterschied zur zweiten Variante erfolgt der Strömungseintritt an einer Kreisringfläche normal zur Drehachsrichtung wie in Fig. 5 ersichtlich.

**Bezugszeichenliste:**

| | | | |
|---|---|---|---|
| 01 | Rotor | 12 | Welle |
| 02 | Wickelkopf | 13 | Torus, Hohltori |
| 03 | Gehäuse | 14, 15 | Rohrabstecher |
| 04 | Wassermantelkühlung | 14' | Strömungseinlass |
| 05 | Drehachse | 16 | Verdichter |
| 06 | Stirnwand | 17 | Leitvorrichtung |
| 07 | Wickelkopfraum | 18, 19 | freigelassen |
| 08 | Pfeil Fluidstrom | 20 | Lager |
| 09 | Düse | 21 | Spalt |
| 10 | Wassermantelinnenfläche | 22 | K-Ring |
| 11 | Radiallüfter | 23 | Wicklung |

## Patentansprüche

1. Kühlung für einen Wickelkopfraum (7) eines elektrischen Generators oder Motors, **dadurch gekennzeichnet, dass** das in ihm enthaltene Fluid an der Innenseite (10) der Wassermantelkühlung (4) mit erhöhter Geschwindigkeit geführt wird.

2. Kühlung nach Anspruch 1, **dadurch gekennzeichnet, dass** das Fluid durch einen auf der Welle (12) des Generators oder Motors aufsitzenden Radiallüfter (11) beschleunigt wird und in einer Leitvorrichtung (17), die eine gebogene Kurve, beispielsweise einen Viertelkreis, ausbildet, an die Innenseite (10) gelenkt wird.

3. Kühlung nach Anspruch 1, **dadurch gekennzeichnet, dass** als Fluid Luft von außen zugeführt wird, die mittels eines oder mehrerer Kompressoren, bzw. Verdichter, Fluidpumpen, Ventilatoren, Druckluft, etc., dem Wickelkopfraum (7) drehachsnahe zugeführt wird, und dass eine Umlenkung und Beschleunigung in einem konusartigen Gebilde erfolgt, sodass sie parallel zur Drehachse (5) auf der Innenseite (10) des Wassermantels /der Kühlfläche (4) herausschießt.

4. Kühlung nach Anspruch 3, **dadurch gekennzeichnet, dass** zusätzlich ein Radiallüfter (11) vorgesehen ist.
